# EUROPEAN PATENT SPECIFICATION

(11) **EP 1 592 201 B1**
(45) Date of publication and mention of the grant of the patent: **14.11.2007**
(21) Application number: 05252526.8
(22) Date of filing: 22.04.2005
(51) Int. Cl.: H04L 29/06, H04M 1/725

(54) **Communication terminal and method for selecting and presenting content**
Kommunikationsgerät und Verfahren zum Auswählen und Darstellen von Inhalten
Terminal de communication et méthode pour sélectionner et présenter du contenu

(30) Priority: 28.04.2004 JP 2004132777
(43) Date of publication of application: 02.11.2005
(73) Proprietor: Sony Corporation, Minato-ku Tokyo 108-0075 (JP)
(72) Inventor: Takai, Motoyuki, c/o Sony Corporation, Tokyo 108-0075 (JP); Sako, Yoichiro, c/o Sony Corporation, Tokyo 108-0075 (JP); Terauchi, Toshiro, c/o Sony Corporation, Tokyo 108-0075 (JP); Inoue, Makoto, c/o Sony Corporation, Tokyo 108-0075 (JP); Asukai, Masamichi, c/o Sony Corporation, Tokyo 108-0075 (JP); Shirai, Katsuya, c/o Sony Corporation, Tokyo 108-0075 (JP); Miyajima, Yasushi, c/o Sony Corporation, Tokyo 180-0075 (JP); Makino, Kenichi, c/o Sony Corporation, Tokyo 108-0075 (JP)
(74) Representative: Nicholls, Michael John

(56) References cited:
- EP-A- 0 875 821
- EP-A- 1 276 307
- EP-A- 1 379 064
- WO-A-03/043356
- US-A- 5 081 707
- US-A- 5 930 501

## Description

### 1. Field of the Invention

The present invention relates to communication terminals, such as cellular phone terminals, having communication functions, such as a conversation function and a mail sending/receiving function, and to methods, in relation to communication using such communication terminals, for selecting content, such as text and images, and for presenting the selected content to terminal users.

### 2. Description of the Related Art

Communication terminals, such as cellular phone terminals, are expected to present content to terminal users in relation to sending/receiving operations by such terminals.

For example, Japanese Patent No. 2944493 discloses a procedure in which users of cellular phones can set melodies and rhythms for ringing tones and notification tones.

Recently, by setting, in advance, a ringing tone for conversation or mail (that is, a so-called "ringing melody" or "ringing song") depending on a call originator or sender, call recipients can easily know who is calling or sending mail.

In addition, Japanese Unexamined Patent Application Publication No. 2001-291002 discloses a procedure in which servers of information delivery service providers select information, such as advertisements and goods, suitable for users in response to requests from the users via communication networks in accordance with information, such as the sex and age of the users, supplied by the users and deliver the information to the users via the communication networks.

WO03/043356 A1 describes a mobile communication device that takes environmental and biological information with sensors and adjusts its user interface according to the environmental or biological information.

The procedure described in Japanese Patent No. 2944493 and other known procedures relating to ringing tones provide users with pleasure to select a favorite ringing tone when setting the ringing tone. However, since a fixed ringing tone is played back for a call originator or sender, these procedures are lacking in terms of entertainment quality, unpredictability, and randomness.

In the information delivery procedure described in Japanese Unexamined Patent Application Publication No. 2001-291002, information is not provided unless users positively make requirements. In addition, since only information convenient for users is provided, this procedure is also lacking in terms of entertainment quality, unpredictability, and randomness.

There is a need for providing entertainment quality, unpredictability, and randomness when content is presented to a user of a communication terminal, such as a cellular phone terminal.

According to an embodiment of the present invention, there is provided a communication terminal communicating with another terminal via a wireless or wired communication network that includes content selection means for selecting content to be presented in relation to a sending/receiving operation of the communication terminal in accordance with at least one piece of reference information from among information representing a send/receive time by the communication terminal, information representing the content of the sending/receiving operation, information representing an environment of the communication terminal or an environment of the other terminal communicating with the communication terminal, and information representing a biological condition of a user of the communication terminal or a biological condition of a user of the other terminal communicating with the communication terminal; content data acquisition means for acquiring data of the selected content by reading the data from a storage device provided in the communication terminal or a recording medium installed in the communication terminal or by receiving the data from an external apparatus; and content presentation means for processing the acquired content data and for presenting the content using outputting means provided in the communication terminal or using external outputting means connected to the communication terminal, wherein the content data is presented at the end of a telephone conversation or during the presentation of a received message.

In the communication terminal having the foregoing structure, for example, the content selection means selects content to be presented at random in accordance only with information representing a send/receive time by the communication terminal, and the content presentation means presents the content selected at random. Thus, entertainment quality, unpredictability, and randomness can be achieved in presentation of content.

Alternatively, for example, the content selection means selects content to be presented in accordance with information representing a send/receive time by the communication terminal, information representing the content of the sending/receiving operation, information representing the environment of the communication terminal or the environment of another terminal communicating with the communication terminal, or information representing a biological condition of a user of the communication terminal or a user of the other terminal communicating with the communication terminal, and the content presentation means presents the selected content. Thus, content appropriate to the situation or the occasion is presented, and entertainment quality, unpredictability, and randomness can be achieved in presentation of content.

Accordingly, entertainment quality, unpredictability, and randomness can be achieved in presentation of content to a user of a communication terminal, such as a cellular phone terminal.

According to another embodiment of the invention, there is provided a content selecting and presenting method performed in a communication terminal communicating with another terminal as disclosed in independent claim 5.

The invention will now be described purely by way of example with reference to the figures, in which:
Fig. 1 shows an example of the structure of functional blocks of a cellular phone terminal functioning as a communication terminal according to an embodiment of the present invention;
Fig. 2 shows a structure of the cellular phone terminal shown in Fig. 1 in terms of selection and presentation of content;
Fig. 3 shows an example of the appearance of the cellular phone terminal shown in Fig. 1;
Fig. 4 is an illustration for explaining designation of the type of content;
Fig. 5 shows an example of a language-of-flowers database;
Fig. 6 shows an example of property information added to content data;
Fig. 7 shows an example of a sayings database;
Fig. 8 shows an example of an illustration database;
Fig. 9 is a flowchart showing a process for selecting and presenting content;
Fig. 10 is a flowchart showing another process for selecting and presenting content;
Fig. 11 shows an example of processing for selecting content;
Fig. 12 shows an example of presentation of content;
Fig. 13 shows another example of presentation of content;
Fig. 14 shows another example of presentation of content; and
Fig. 15 shows another example of presentation of content.

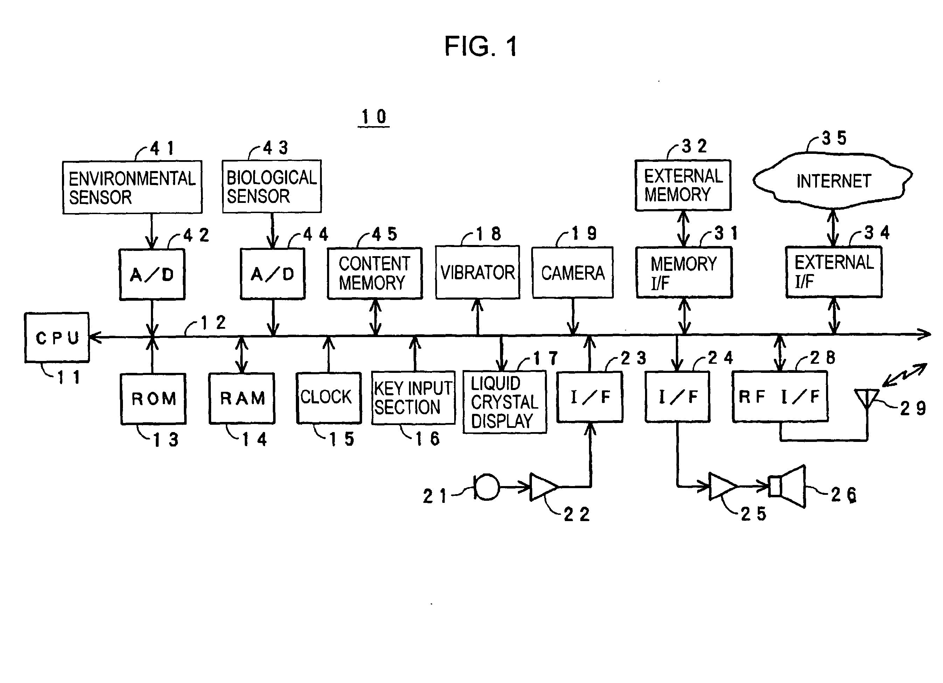

Fig. 1 shows an example of the structure of functional blocks of a cellular phone terminal 10 functioning as a communication terminal according to an embodiment of the present invention.

The cellular phone terminal 10 includes a central processing unit (CPU) 11. A read-only memory (ROM) 13 in which a program, such as a program for selecting and presenting content performed by the CPU 11, and necessary fixed data are written and a random-access memory (RAM) 14 in which the program and data are loaded are connected to a bus 12 for the CPU 11.

A clock 15 for measuring date and time, a key input section 16 functioning as an operation section, a liquid crystal display 17, a vibrator 18 generating vibrations when an incoming call or mail arrives in a silent mode, and a camera 19 are connected to the bus 12.

A telephone transmitter (microphone) 21 is connected to the bus 12 via a sound amplifying circuit 22 and an interface 23, such as an analog-to-digital (A/D) converter. A telephone receiver (speaker) 26 is connected to the bus 12 via an interface 24, such as a digital-to-analog (D/A) converter and a sound amplifying circuit 25. A sending/receiving antenna 29 is connected to the bus 12 via a radio-frequency (RF) interface 28, such as an RF sending/receiving circuit.

An external memory 32, such as a Memory Stick^{(™)}, installed on the cellular phone terminal 10 is connected to the bus 12 via a memory interface 31. The bus 12 is connected to the Internet 35 via an external interface 34.

An environmental sensor 41 is connected to the bus 12 via an A/D converter 42. A biological sensor 43 is connected to the bus 12 via an A/D converter 44.

The environmental sensor 41 measures the environment in which the cellular phone terminal 10 is located. The environmental sensor 41 measures, for example, (1) the weather or climate, such as the temperature, the humidity, the air pressure, the direction of wind, the speed of wind, and the amount of wind, (2) the position, such as the latitude, the longitude, and the elevation, and geographical conditions, such as the terrain, and (3) illumination and sound conditions, such as the intensity of illumination, the color of illumination, and the environmental sound. The environmental sensor 41 includes a temperature sensor, an air pressure sensor, a wind speed sensor, a position sensor, an optical sensor, and a microphone.

The biological sensor 43 measures biological conditions of a user (owner) of the cellular phone terminal 10. In other words, the biological sensor 43 measures the body motion (operations of the body), hand grip pressure, myoelectric potential, skin surface potential, heart rate, pulse rate, blood pressure, breathing rate, brain waves, a magnetoencephalogram, microvibrations, skin perspiration, skin resistance, pupil diameter, biochemical reactions, and the like. The biological sensor 43 includes a pressure sensor, a bending sensor, a distance sensor, an acceleration sensor, an inclination sensor, a magnetic sensor, a current sensor, a charged potential sensor, an electromagnetic induction sensor, a temperature sensor, and a camera.

In this example, a content memory 45 is connected to the bus 12. Various content data are stored in the content memory 45 in advance.

Content is information, such as text (characters), images, sound, light, vibrations, and mechanical changes, that can be sensed by the human five senses. Images are, for example, moving images, static images, graphics, and illustrations. Sound is, for example, music, speaking voices, and natural sound. Content data represents such content as digital data.

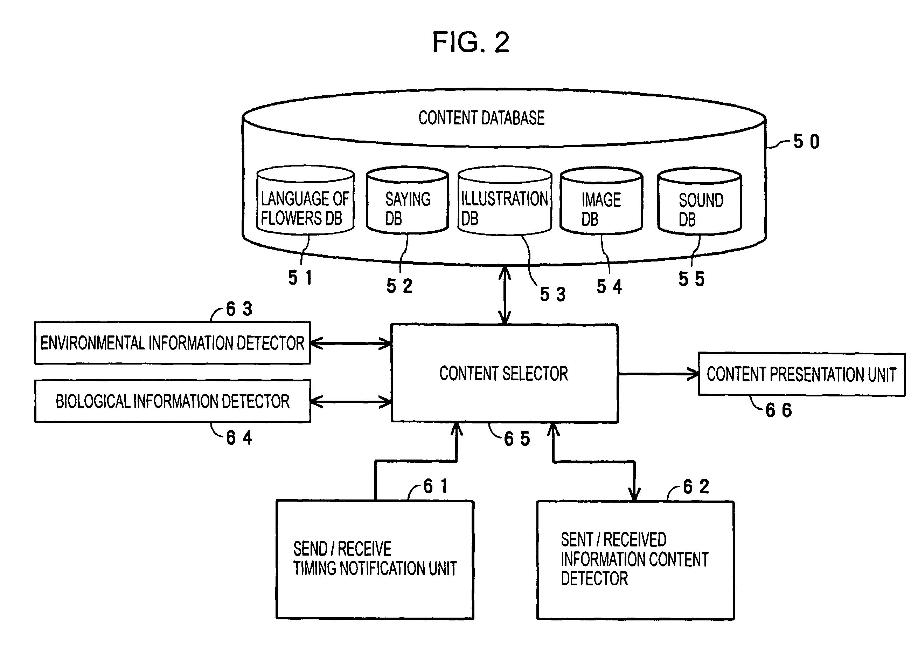

In terms of selection and presentation of content, the cellular phone terminal 10 having the foregoing structure includes a content database 50, a send/receive timing notification unit 61, a sent/received information content detector 62, an environmental information detector 63, a biological information detector 64, a content selector 65, and a content presentation unit 66, as shown in Fig. 2.

The content memory 45 includes the content database 50. In this example, the content database 50 is categorized into a language-of-flowers database 51, a sayings database 52, an illustration database 53, an image database 54, and a sound database 55.

Text data of the language of flowers is stored in the language-of-flowers database 51, and text data of sayings (proverbs) is stored in the sayings database 52.

Although illustrations are one type of images, as described above, illustration data is stored in the illustration database 53 separately from other types of image data in this example. Image data other than illustration data is stored in the image database 54, and sound data, such as audio phrases, is stored in the sound database 55.

The send/receive timing notification unit 61 notifies the start and ending of a conversation between the cellular phone terminal 10 and another cellular phone terminal, mail reception by the cellular phone terminal 10, mail transmission by the cellular phone terminal 10, and the like to the content selector 65.

The sent/received information content detector 62 detects the contents of sent/received information, such as the content of sent/received mail, the volume of speech, the time of conversation, and the like.

The environmental information detector 63 measures the environment of the cellular phone terminal 10, and detects environmental information. The biological information detector 64 measures the biological conditions of the user of the cellular phone terminal 10, and detects biological information, as described above.

The content selector 65 includes the CPU 11, the ROM 13, and the RAM 14. After receiving notification from the send/receive timing notification unit 61, the content selector 65 detects the contents of sent/received information via the sent/received information content detector 62, detects environmental information and biological information via the environmental information detector 63 and the biological information detector 64, selects content, as described below, and reads the content data from the content database 50.

The content presentation unit 66 processes the content data acquired by the content selector 65, and presents the processed content to the user of the cellular phone terminal 10. In the example shown in Figs. 1 and 2, the liquid crystal display 17 outputs and presents the language of flowers, sayings, illustrations, and images to the user, and the telephone receiver (speaker) 26 outputs and presents sound to the user.

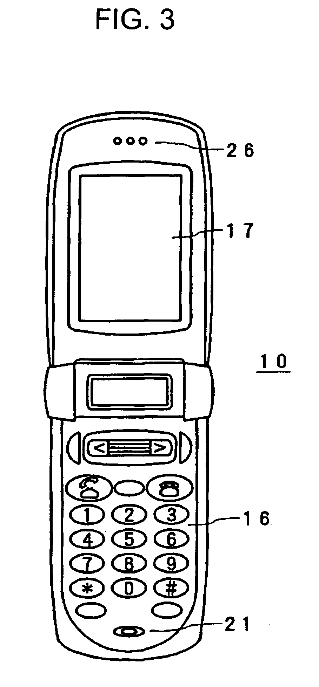

Fig. 3 shows an example of the appearance of the cellular phone terminal 10. In this example, the cellular phone terminal 10 has a collapsible structure. The key input section 16 and the telephone transmitter 21 are provided at the base of the cellular phone terminal 10, and the liquid crystal display 17 and the telephone receiver 26 are provided at the opening and closing part of the cellular phone terminal 10.

In this example, the cellular phone terminal 10 is arranged such that the type of content to be presented to a person who is expected to be a communicating party in the sending/receiving operation by the user of the cellular phone terminal 10 when the communicating party originates a call or sends mail (when the call or the mail is received by the cellular phone terminal 10) or when the user originates a call or sends mail to the communicating party (when the call is originated or the mail is sent from the cellular phone terminal 10) is designated in advance and the designated type is stored in a relationship table.

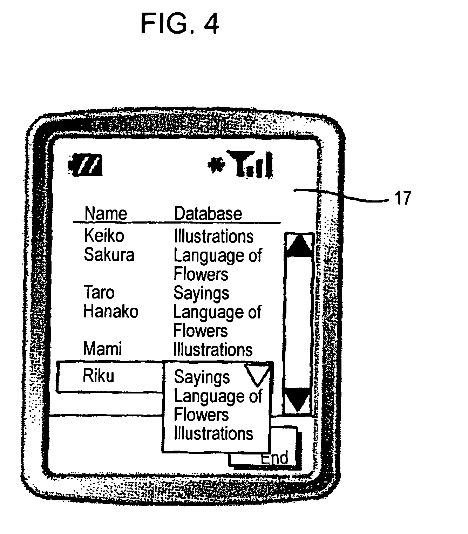

More specifically, an operation by the key input section 16 causes a database designation screen to be displayed on the liquid crystal display 17, as shown in Fig. 4, so that the type of content to be presented to a communicating party already registered or newly registered in a telephone directory can be selected from five types, that is, the language of flowers, sayings, illustrations, images, and sound, using the database designation screen.

In the example shown in Fig. 4, "illustrations" is designated for "Keiko" and "Mami", "the language of flowers" is designated for "Sakura" and "Hanako", "sayings" is designated for "Taro", and a type is being selected from a pull-down menu for "Riku".

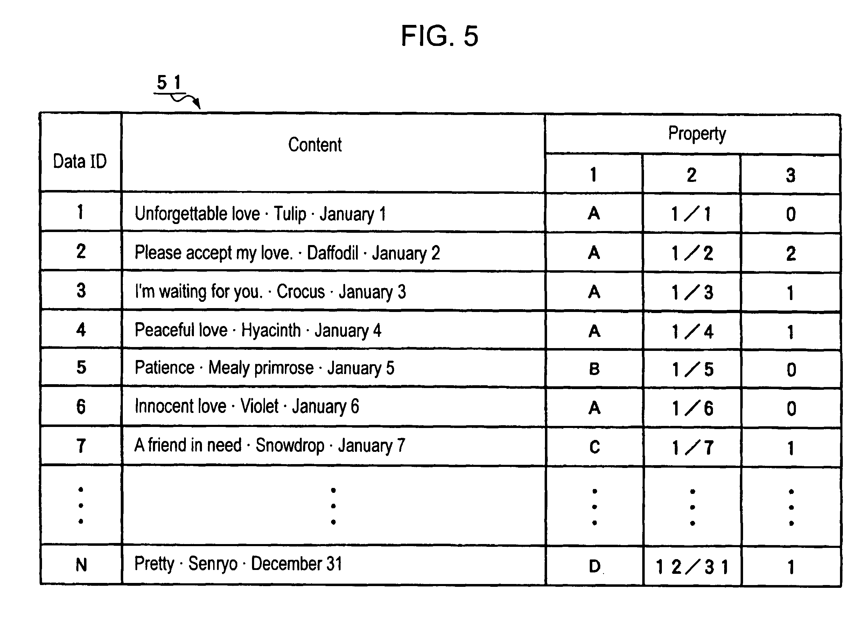

Fig. 5 shows an example of the language-of-flowers database 51. As the language-of-flowers database 51, a data ID (an identifier, such as an identification number) and property information, that is, property 1, property 2, and property 3 are added to text data of the language of flowers for each date from January 1 to December 31.

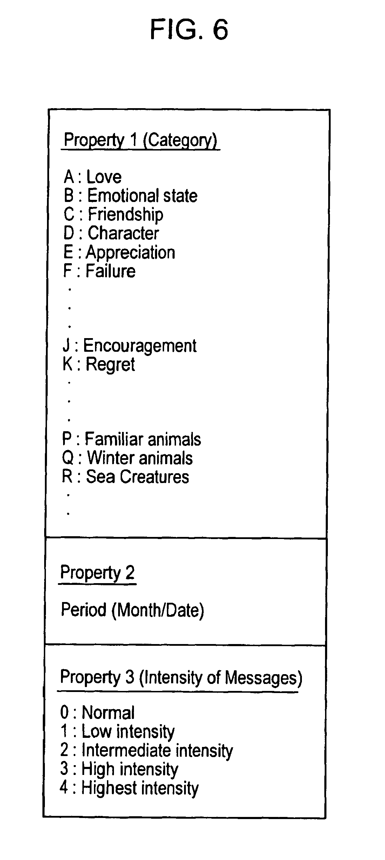

Fig. 6 shows an example of property information added to each content data. Property 1 represents the category of content. Property 2 represents the period set for the content. Property 3 represents the intensity of a message set for the content.

For the language of flowers, the month and date, such as "1/1" or "12/31", set for the corresponding language of flowers is provided as property 2 (period). In contrast, irrespective of the type of content, the intensity of a message set for the content, from among five levels, level 0 "normal", level 1 "low intensity", level 2 "intermediate intensity", level 3 "high intensity", and level 4 "highest intensity", is provided as property 3 (the intensity of a message).

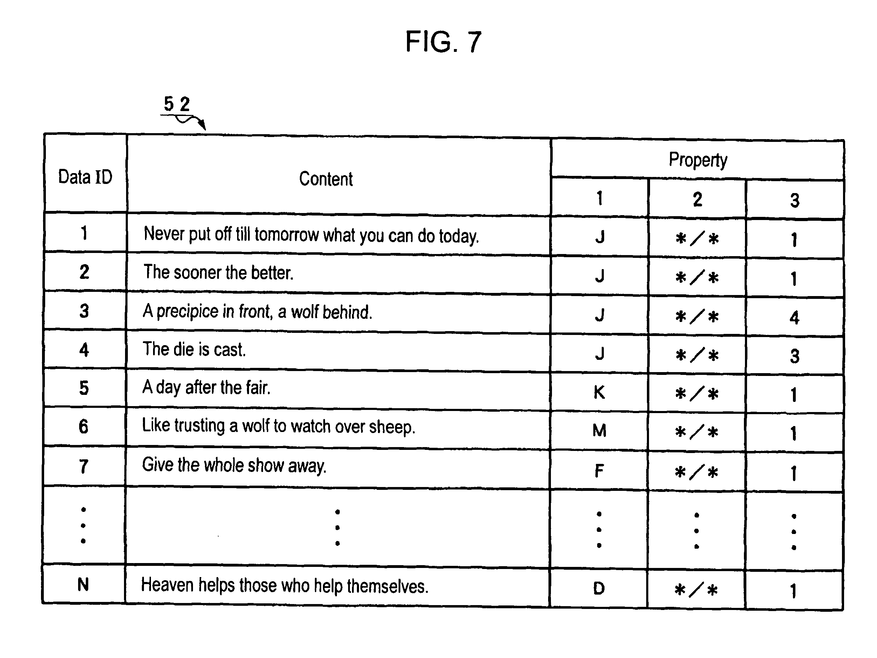

Fig. 7 shows an example of the sayings database 52. As the sayings database 52, a data ID and property information, that is, property 1, property 2, and property 3 are added to text data of each saying. However, since each saying is irrespective of the season and month and date, the period, that is, property 2, for the saying is "*/*", which represents that the date is not fixed.

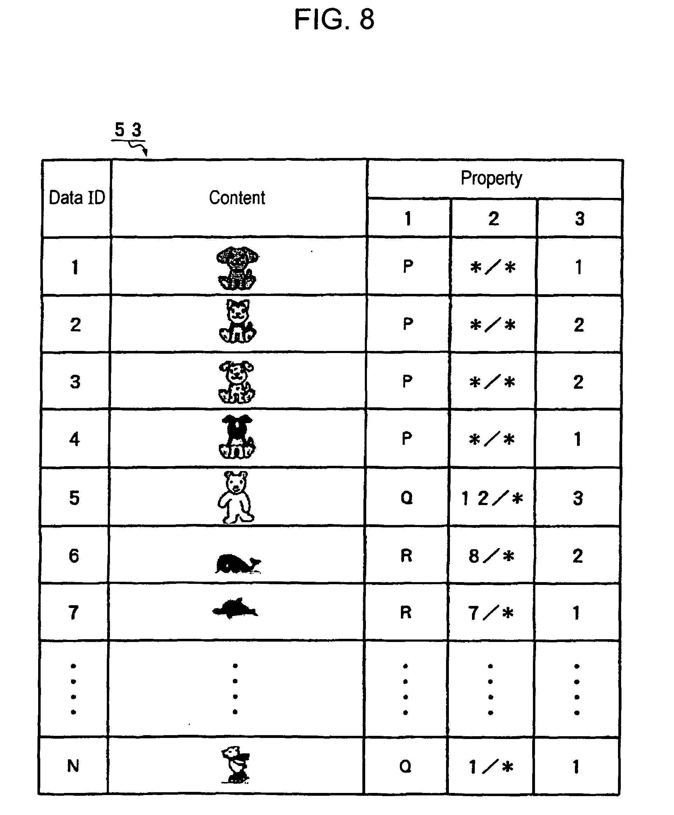

Fig. 8 shows an example of the illustration database 53. As the illustration database 53, a data ID and property information, that is, property 1, property 2, and property 3 are added to illustration data of each illustration.

However, the period, that is, property 2, for illustrations of dogs, whose data IDs are 1, 2, 3, and 4, is "*/*" since these illustrations are irrespective of the season and month and time. In contrast, the period (property 2) for an illustration of a "standing white bear", whose data ID is 5, is "12/*", which represents December. The period (property 2) for an illustration of a "whale", whose data ID is 6, is "8/*", which represents August. The period (property 2) for an illustration of a "dolphin", whose data ID is 7, is "7/*", which represents July.

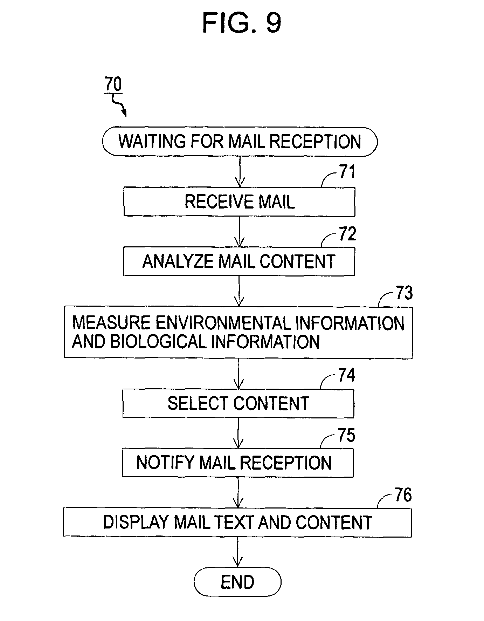

A method for selecting and presenting content will now be described with reference to Figs. 9 to 15. In the cellular phone terminal 10, the content selector 65 selects content and the content presentation unit 66 presents the selected content when, for example, (1) the cellular phone terminal 10 starts reception, is in the process of reception, or ends reception; (2) the user of the cellular phone terminal 10 calls up unread received mail on the liquid crystal display 17; (3) the cellular phone terminal 10 starts transmission, is in the process of transmission, or ends transmission, (4) the user of the cellular phone terminal 10 creates new mail or calls up unsent created mail on the liquid crystal display 17 to be edited.

Fig. 9 is a flowchart showing an example of a process 70 for selecting and presenting content performed by the CPU 11 constituting the content selector 65 and the content presentation unit 66 when the content is selected and displayed after reception of mail.

In the process 70, when waiting for mail reception, mail is received in step S71. The mail content is analyzed in step S72, and the environmental sensor 41 and the biological sensor 43 measure environmental information and biological information in step S73. Then, in step S74, content to be presented is selected in accordance with a communicating party (a mail sender) and mail reception date and time detected in step S71, the mail content analyzed in step S72, and the environmental information and the biological information measured in step S73.

In step S75, the user is notified of the reception of the mail by an incoming mail indication on the liquid crystal display 17, outputting an incoming mail tone from the telephone receiver 26, or generation of vibrations by the vibrator 18. When the user performs an operation to call up the received mail in response to the notification, text of the received mail and the content selected in step S74 are displayed on the liquid crystal display 17 in step S76.

If the content selected in step S74 is sound data stored in the sound database 55, an audio phrase or the like using the sound data is output from the telephone receiver (speaker) 26 in step S76.

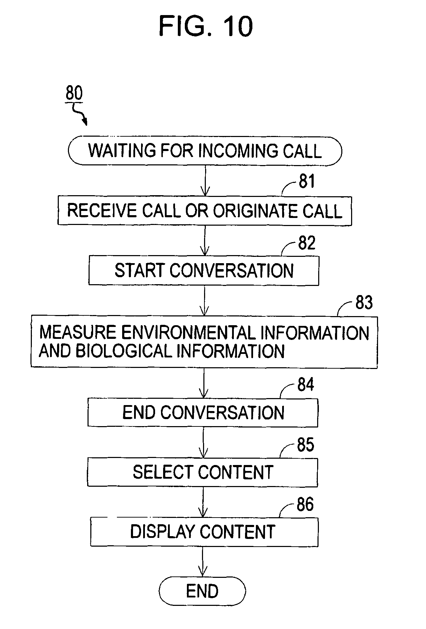

Fig. 10 is a flowchart showing a process 80 for selecting and presenting content performed by the CPU 11 constituting the content selector 65 and the content presentation unit 66 when the content is selected and displayed after completion of a conversation between the cellular phone terminal 10 and another cellular phone terminal.

In the process 80, when waiting for an incoming call, an incoming call from the other terminal (a communicating party) arrives or the cellular phone terminal 10 originates a call in step S81. Conversation starts in step S82, and the environmental sensor 41 and the biological sensor 43 measure environmental information and biological information in step S83.

In step S84, the conversation ends. Then, in step S85, content to be presented is selected in accordance with the communicating party detected in step S81, the conversation start date and time or the conversation end date and time detected in step S82 or step S84, and the environmental information and the biological information measured in step S83. Then, in step S86, the selected content is displayed on the liquid crystal display 17.

If the content selected in step S85 is sound data stored in the sound database 55, an audio phrase using the sound data is output from the telephone receiver (speaker) 26 in step S86.

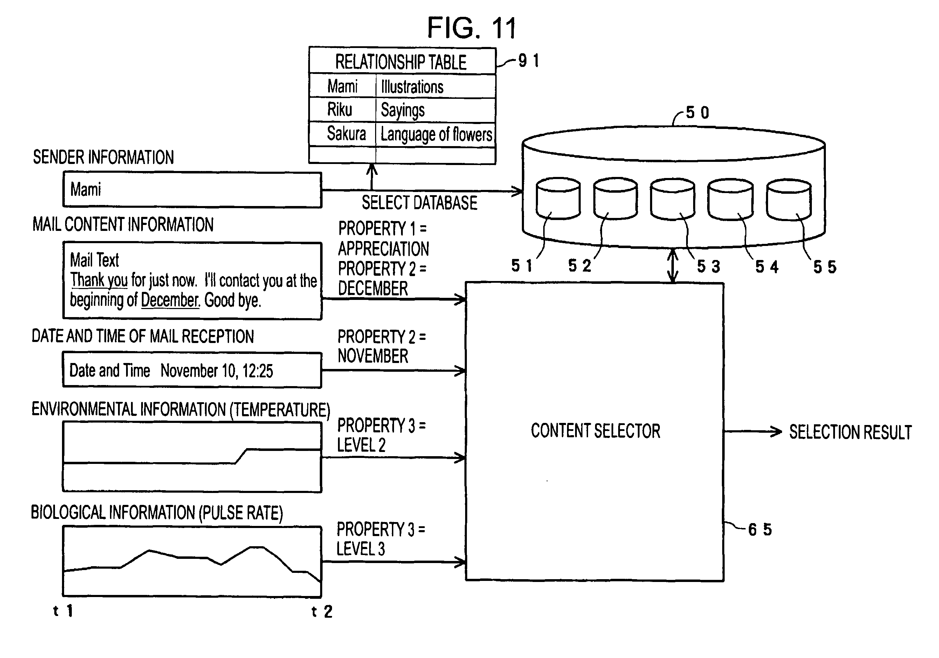

Fig. 11 shows an example of processing for selecting content performed by the content selector 65 when the content is selected and displayed after reception of mail as shown in Fig. 9.

This example shows a case where mail sent from "Mami", who is one of the communicating parties for which the type of content is designated in a relationship table 91, as shown in Fig. 4, is received. The type of content, namely, illustrations, is specifically designated for "Mami".

The mail text sent from "Mami" includes the words "thank you", whose property 1 (category) is set to "E: Appreciation" and the word "December", whose property 2 (period) is set to "12/*". This mail is received at 12:25 on November 10.

In addition, in this example, a temperature sensor is provided as the environmental sensor 41 to measure the temperature around the cellular phone terminal 10, and a pulse rate sensor is provided as the biological sensor 43 to measure the pulse rate of the user who holds the cellular phone terminal 10.

The content selector 65 extracts the category "E: Appreciation" as property 1 from the words "thank you" in the received mail text, the period "12/*" (December) as property 2 from the word "December", the period "11/10" (November 10) as property 2 from the mail reception date and time "12:25 on November 10" in step S72 in Fig. 9.

In addition, the content selector 65 measures the temperature as environmental information and the pulse rate as biological information during the period from time t1 to time t2 in Fig. 11 in step S73 in Fig. 9. For example, when the temperature sensor reads a moderate temperature, "level 2 (intermediate intensity)" is extracted as property 3. For example, when the pulse rate sensor reads a relatively high pulse rate, "level 3 (high intensity)" is extracted as property 3.

The intensity of a message is extracted as property 3 from environmental information and biological information. For environmental information represented directly using a value, such as the temperature, the humidity, the air pressure, the speed of wind, the amount of wind, and the intensity of illumination, the normal value is set to "level 0 (normal)", and the intensity of the message increases as the distance from the normal value increases. In contrast, for environmental information that is not represented directly using a value, such as the direction of wind, the position, geographical conditions, and the color of illumination, "level 0 (normal)" is assigned to a predetermined direction of wind, a predetermined position, predetermined geographical conditions, and a predetermined color of illumination, and the intensity of the message increases as the distance from the predetermined value increases. The intensity of messages is determined in accordance with biological information in a similar manner.

By setting the level of property 3 in accordance with biological information, such as the pulse rate and the breathing rate, it is possible to guess the degrees of activity, wakefulness, concentration, relaxation, stress, fatigue, pleasantness, and discomfort of the user of the cellular phone terminal 10. More specifically, when the level of property 3 is high, it is determined that the degree of relaxation is low and the degree of stress or fatigue is high, although the degree of activity, wakefulness, or concentration is high.

Since the mail sender is "Mami" and the type of content "illustrations" is designated for "Mami" in the relationship table 91, the content selector 65 selects the type of content "illustrations", that is, the illustration database 53, and selects content to be presented in accordance with determination by weighting the analysis result in step S74 in Fig. 9.

In the foregoing example, two different analysis results, which are "December" determined from the mail content and "November" determined from the mail reception date and time, are acquired for property 2 (period). For example, a high priority is put on "December" determined from the mail content, and property 2 is set to "December". In addition, two different analysis results, which are "level 2 (intermediate intensity)" determined from the temperature functioning as environmental information and "level 3 (high intensity)" determined from the pulse rate functioning as biological information, are acquired for property 3 (the intensity of a message). For example, a high priority is put on "level 3 (high intensity)" determined from the pulse rate functioning as biological information, and property 3 is set to "level 3 (high intensity)".

Thus, in the foregoing example, the type of content "illustrations", property 1 (category) "E: Appreciation", property 2 (period) "December", and property 3 (the intensity of the message) "level 3 (high intensity)" are set. The content selector 65 selects an illustration for which the number of satisfied properties is the largest from among illustrations stored in the illustration database 53 shown in Fig. 8, that is, the illustration of the "standing white bear", whose data ID is 5 (property 1 (category) is "Q: winter animals", property 2 (period) is "December", and property 3 (the intensity of the message) is "level 3 (high intensity)") in accordance with all the analysis results, and reads the illustration data from the illustration database 53.

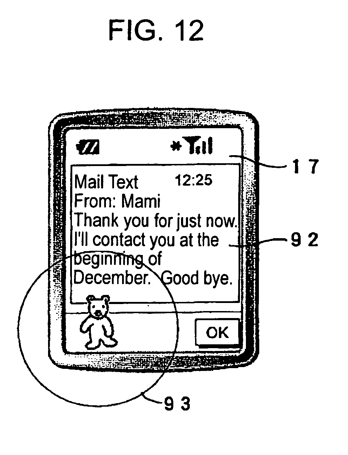

Accordingly, mail text 92 and an illustration 93 of the "standing white bear" are displayed on the liquid crystal display 17 in step S76 in Fig. 9, as shown in Fig. 12.

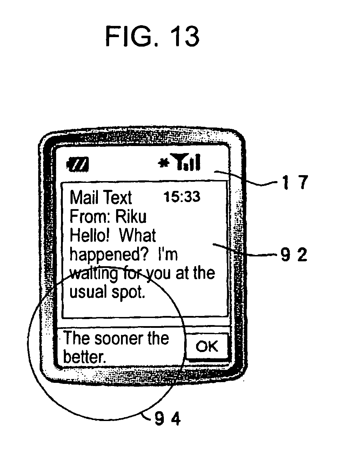

When mail from "Riku", who is one of the communicating parties for which the type of content is designated in the relationship table 91, is received, since the type of content "sayings" is specifically designated for "Riku", for example, a saying "The sooner the better.", whose data ID is 2, as shown in Fig. 7, is selected in accordance with analysis results of the mail content, the mail reception date and time, the temperature functioning as environmental information, and the pulse rate functioning as biological information, and the mail text 92 and a saying 94 "The sooner the better." are displayed on the liquid crystal display 17, as shown in Fig. 13.

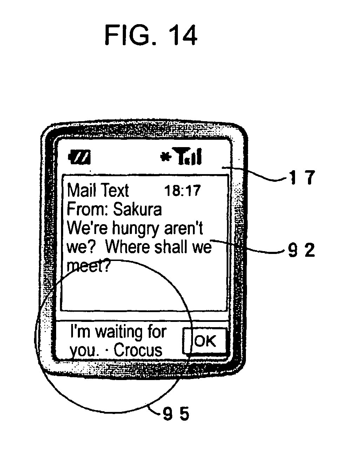

When mail from "Sakura", who is one of the communicating parties for which the type of content is designated in the relationship table 91, is received, since the type of content "the language of flowers" is specifically designated for "Sakura", for example, the language of flowers "I'm waiting for you. · Crocus", whose data ID is 3, as shown in Fig. 5, is selected in accordance with analysis results of the mail content, the mail reception date and time, the temperature functioning as environmental information, and the pulse rate functioning as biological information, and the mail text 92 and the language of flowers 95 "I'm waiting for you. · Crocus" are displayed on the liquid crystal display 17, as shown in Fig. 14.

In a case where content is selected and displayed after completion of the conversation, as shown in Fig. 10, the content is selected in accordance with analysis results of a communicating party of the conversation, the conversation start date and time or the conversation end date and time, environmental information, and biological information. In this case, the volume of speech and the conversation time can be taken into consideration, as shown in Fig. 2.

More specifically, property 3 (the intensity of a message) is extracted from the volume of speech or the conversation time. If the volume of speech or the conversation time is less than a predetermined value, "level 0 (normal)" is set. In accordance with an increase in the volume of speech or the conversation time, the intensity of a message increases.

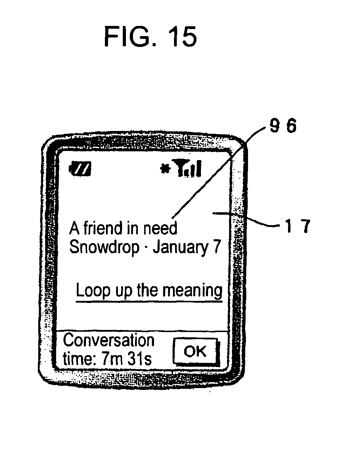

For example, when the type of content "the language of flowers" is designated for a communicating party of a conversation in the relationship table 91, as a result of analysis, for example, the language of flowers "A friend in need · Snowdrop", whose data ID is 7, as shown in Fig. 5, is selected, and a language of flowers 96 "A friend in need · Snowdrop" is displayed on the liquid crystal display 17, as shown in Fig. 15.

Although cases where the cellular phone terminal 10 selects and presents content when the cellular phone terminal 10 receives mail from a communicating party are shown in Fig. 9 and 11, the cellular phone terminal 10 can also select and present content when the user of the cellular phone terminal 10 creates new mail, when the user calls up unsent created mail on the liquid crystal display 17 to be edited, when the user sends mail to a communicating party, or after the user sends mail to the communicating party.

In this case, the content of mail sent or to be sent, instead of received mail, may be analyzed, and the creation date and time or the sending date and time, instead of the mail reception date and time, may be analyzed, so that content can be selected in accordance with the analysis results.

Also, when content is selected and presented during conversation or after conversation, property 1 (category) can be extracted in accordance with words, such as "thank you", by analyzing the conversation content (talking content) using speech recognition, so that suitable content can be selected taking into consideration the results.

### (Modifications)

A case where the environment in which the cellular phone terminal 10, which selects and presents content, is located and biological conditions of a user of the cellular phone terminal 10 are measured and such information is used as reference information for content selection has been described. However, in a case where a cellular phone terminal of a communicating party has a similar structure to the cellular phone terminal 10, when, for example, mail is sent from the cellular phone terminal of the communicating party to the cellular phone terminal 10, the environment in which the cellular phone terminal of the communicating party is located and biological conditions of the communicating party may be measured. In this case, the environmental information and the biological information are sent from the cellular phone terminal of the communicating party to the cellular phone terminal 10. The cellular phone terminal 10 may receive the mail or the like, the environmental information, and the biological information, analyze them, and select content to be presented.

In this case, the user of the cellular phone terminal 10 can guess the environment and biological conditions of the communicating party from the content selected and presented. Thus, entertainment quality, unpredictability, and randomness that provide a different "flavor" from a case where content is selected in accordance with analysis results of the environment and biological conditions of the user of the cellular phone terminal 10 can be achieved.

Although a case where a plurality of pieces of information, such as information representing a send/receive time, information representing the content of the sending/receiving operation, environmental information, and biological information is analyzed and content to be presented is selected has been described, for example, content to be presented may be selected at random in accordance only with the send/receive time, that is, the mail reception time or the conversation end time.

In addition, although a case where content data is stored as the content database 50 in the content memory 45 of the cellular phone terminal 10 has been described, the content data may be stored in a recording medium, such as the external memory 32 shown in Fig. 1, installed in the cellular phone terminal 10, so that the content data can be read from the recording medium when content is selected and presented. Alternatively, the content data may be stored in a network-connected delivery server, so that the content data can be acquired by being connected to the delivery server and receiving the content data from the delivery server when content is selected and presented.

The present invention is not necessarily applied to a cellular phone terminal. The present invention can also be applied to other communication terminals.

It should be understood by those skilled in the art that various modifications, combinations, sub-combinations and alterations may occur depending on design requirements and other factors insofar as they are within the scope of the appended claims.

## Claims

1. A communication terminal (10) communicating with another terminal via a wireless or wired communication network, comprising:
content selection means (65) for selecting content to be presented in relation to a sending/receiving operation of the communication terminal in accordance with at least one piece of reference information from among:
information (61) representing a send/receive time by the communication terminal,
information (62) representing the content of the sending/receiving operation,
information (63) representing an environment of the communication terminal or an environment of the other terminal communicating with the communication terminal, and
information (64) representing a biological condition of a user of the communication terminal or a biological condition of a user of the other terminal communicating with the communication terminal;
content data acquisition means (31;34)for acquiring data of the selected content by reading the data from a storage device (50) provided in the communication terminal or a recording medium installed in the communication terminal or by receiving the data from an external apparatus (32;35); and
content presentation means (66) for processing the acquired content data and for presenting the content using outputting means (17;26) provided in the communication terminal (10) or using external outputting means connected to the communication terminal, wherein the content data is presented at the end of a telephone conversation (86) or during the presentation of a received message (76).

2. The communication terminal according to Claim 1, wherein the content selection means (65) selects (74;85) the content in accordance with the reference information and communicating party information representing a communicating party in the sending/receiving operation.

3. The communication terminal according to Claim 2, further comprising content type designation means for designating the type of content for an expected communicating party in the sending/receiving operation, wherein:
the content data stored in the storage device (50), the recording medium, or the external apparatus is categorized into a plurality of types (51,52,53,54,55) of content; and
when the content type designation means designates a type of content for the communicating party in the sending/receiving operation represented by the communicating party information, the content selection means selects (74;85) the content of the designated type.

4. The communication terminal according to Claim 1, 2, or 3, wherein:
information representing the category of the content, information representing a period set for the content, or information representing the intensity of a message set for the content is added, as property information representing the property of the content, to the content data stored in the storage device (50), the recording medium, or the external apparatus; and
the content selection (65) means analyzes the reference information, refers to the property information, and selects content having a property that fits an analysis result of the reference information.

5. A content selecting and presenting method performed in a communication terminal communicating with another terminal via a wireless or wired communication network in relation to a sending/receiving operation of the communication terminal, the method comprising the steps of:
selecting (74,85) content to be presented in accordance with at least one piece of reference information from among information representing a send/receive time by the communication terminal,
information (62) representing the content of the sending/receiving operation,
information (63) representing an environment of the communication terminal or an environment of the other terminal communicating with the communication terminal, and
information (64) representing a biological condition of a user of the communication terminal or a biological condition of a user of the other terminal communicating with the communication terminal;
acquiring data of the selected content by reading the data from a storage device (50) provided in the communication terminal (10) or a recording medium installed in the communication terminal or by receiving the data from an external apparatus; and
processing the acquired content data and presenting the content using outputting means provided in the communication terminal or using external outputting means connected to the communication terminal, wherein the content data is presented at the end of a conversation (86) or during the presentation of a received message (76).

6. The content selecting and presenting method according to Claim 5, wherein the content is selected (74,85) in the selecting step in accordance with the reference information and communicating party information representing a communicating party in the sending/receiving operation.

7. The content selecting and presenting method according to Claim 6, wherein:
the content data stored in the storage device (50), the recording medium, or the external apparatus is categorized into a plurality of types (51,52,53,54,55) of content; and
when a type of content is designated, by content type designation means for designating the type of content for an expected communicating party in the sending/receiving operation, for the communicating party in the sending/receiving operation represented by the communicating party information, the content of the designated type is selected in the selecting step (74,85).

8. The content selecting and presenting method according to Claim 5, 6, or 7, wherein:
information representing the category of the content, information representing a period set for the content, or information representing the intensity of a message set for the content is added, as property information representing the property of the content, to the content data stored in the storage device, the recording medium, or the external apparatus; and
the reference information is analyzed, the property information is referred to, and content having a property that fits an analysis result of the reference information is selected in the selecting step (74,85).

## Patentansprüche

1. Kommunikationsendgerät (10), welches mit einem anderen Endgerät über ein drahtloses oder drahtgebundenes Kommunikationsnetzwerk kommuniziert, welches umfasst:
eine Inhaltsauswahleinrichtung (65) zum Auswählen von Inhalt, der in Bezug auf einen Sende-/Empfangsbetrieb des Kommunikationsendgeräts zu zeigen ist, gemäß zumindest einem Teil an Referenzinformation von:
Information (61), welche eine Sende-/Empfangszeit durch das Kommunikationsendgerät zeigt,
Information (62), welche den Inhalt des Sende-/Empfangsbetriebs zeigt,
Information (63), welche eine Umgebung des Kommunikationsendgeräts oder eine Umgebung des anderen Endgeräts zeigt, welches mit dem Kommunikationsendgerät kommuniziert, und
Information (64), welche einen biologischen Zustand eines Benutzers des Kommunikationsendgeräts oder einen biologischen Zustand eines Benutzers des anderen Endgeräts, welches mit dem Kommunikationsendgerät kommuniziert, zeigt;
eine Inhaltsdaten-Erwerbseinrichtung (31; 34) zum Erwerben von Daten des ausgewählten Inhalts durch Lesen der Daten von einer Speichereinrichtung (50), welche im Kommunikationsendgerät vorgesehen ist, oder einem Aufzeichnungsmedium, welches im Kommunikationsendgerät installiert ist, oder durch Empfangen der Daten von einer externen Vorrichtung (32; 35); und
eine Inhaltsdarstellungseinrichtung (66) zum Verarbeiten der erworbenen Inhaltsdaten und zum Darstellen des Inhalts unter Verwendung der Ausgabeeinrichtung (17; 26), welche im Kommunikationsendgerät (10) vorgesehen ist, oder zum Verwenden einer externen Ausgabeeinrichtung, welche mit dem Kommunikationsendgerät verbunden ist, wobei die Inhaltsdaten am Ende eines Telefongesprächs (86) oder während der Darstellung einer empfangenen Nachricht (76) dargestellt werden.

2. Kommunikationsendgerät nach Anspruch 1, wobei die Inhaltsauswahleinrichtung (65) den Inhalt gemäß der Referenzinformation und der Information der kommunizierenden Partei, welche eine kommunizierende Partei beim Sende-/Empfangsbetrieb zeigt, auswählt (74; 85).

3. Kommunikationsendgerät nach Anspruch 2, welches außerdem eine Inhaltsart-Bestimmungseinrichtung umfasst, um die Art des Inhalts für eine erwartete kommunizierende Partei beim Sende-/Empfangsbetrieb zu bestimmen, wobei:
die Inhaltsdaten, welche in der Speichereinrichtung (50), im Aufzeichnungsmedium oder in der externen Vorrichtung gespeichert sind, in mehrere Inhaltsarten (51, 52, 53, 54, 55) kategorisiert sind; und
wenn die Inhaltsart-Bestimmungseinrichtung eine Inhaltsart für die kommunizierende Partei beim Sende-/Empfangsbetrieb bestimmt, der durch die kommunizierende Parteiinformation gezeigt wird, die Inhaltsauswahleinrichtung den Inhalt der bestimmten Art auswählt (74; 85).

4. Kommunikationsendgerät nach Anspruch 1, 2 oder 3, wobei
die Information, welche die Kategorie des Inhalts zeigt, die Information, welche eine Periode zeigt, welche für den Inhalt eingestellt ist, oder die Information, welche die Intensität einer Nachricht zeigt, welche für den Inhalt eingestellt ist, als Eigenschaftsinformation, welche die Eigenschaft des Inhalts zeigt, den Inhaltsdaten, welche in der Speichereinrichtung (50) im Aufzeichnungsmedium oder in der externen Vorrichtung gespeichert sind, hinzugefügt ist; und
die Inhaltsauswahleinrichtung (65) die Referenzinformation analysiert, diese auf die Eigenschaftsinformation bezieht und Inhalt, der eine Eigenschaft hat, der zu einem Analyseergebnis der Referenzinformation passt, auswählt.

5. Inhaltsauswahl- und Darstellungsverfahren, welches in einem Kommunikationsendgerät durchgeführt wird, welches mit einem anderen Endgerät über ein drahtloses oder drahtgebundenes Kommunikationsnetzwerk kommuniziert, in Bezug auf einen Sende-/Empfangsbetrieb des Kommunikationsendgeräts, wobei das Verfahren folgende Schritte umfasst:
Auswählen (74, 85) von Inhalt, der gemäß zumindest einem Teil an Referenzinformation unter der Information, welche eine Sende-/Empfangszeit zeigt, durch das Kommunikationsendgerät dazustellen ist,
Information (62), welche den Inhalt des Sende-/Empfangsbetriebs darstellt,
Information (63), welche eine Umgebung des Kommunikationsendgeräts oder eine Umgebung des anderen Endgeräts zeigt, welches mit dem Kommunikationsendgerät kommuniziert, und
Information (64), welche einen biologischen Zustand eines Benutzers des Kommunikationsendgeräts oder einen biologischen Zustand eines Benutzers des anderen Endgeräts zeigt, welches mit dem Kommunikationsendgerät kommuniziert;
Erwerben von Daten des ausgewählten Inhalts durch Lesen der Daten von einer Speichereinrichtung (50), welche im Kommunikationsendgerät (10) oder in einem Aufzeichnungsmedium, welches im Kommunikationsendgerät installiert ist, vorgesehen ist, oder durch Empfangen der Daten von einer externen Vorrichtung; und
Verarbeiten der erworbenen Inhaltsdaten und Darstellen des Inhalts unter Verwendung der Ausgabeeinrichtung, welche im Kommunikationsendgerät vorgesehen ist, oder unter Verwendung der externen Ausgabeeinrichtung, welche mit dem Kommunikationsendgerät verbunden ist, wobei die Inhaltsdaten am Ende einer Konversation (86) oder während der Darstellung einer empfangenen Nachricht (76) dargestellt werden.

6. Inhaltsauswahl- und Darstellungsverfahren nach Anspruch 5, wobei der Inhalt im Auswahlschritt gemäß der Referenzinformation und der Information einer kommunizierenden Partei, welche eine kommunizierende Partei bei Sende-/Empfangsbetrieb zeigt, ausgewählt wird (74, 85).

7. Inhaltsauswahl- und Darstellungsverfahren nach Anspruch 6, wobei:
die Inhaltsdaten, welche in der Speichereinrichtung (50), im Aufzeichnungsmedium oder in der externen Vorrichtung gespeichert sind, in mehrere Inhaltsarten (51, 52, 53, 54, 55) kategorisiert werden; und
wenn eine Inhaltsart durch die Inhaltsart-Bestimmungseinrichtung bestimmt wird, um die Inhaltsart für eine erwartete kommunizierende Partei beim Sende-/Empfangsbetrieb zu bestimmen, für die kommunizierende Partei beim Sende-/Empfangsbetrieb, der durch die Information der kommunizierenden Partei gezeigt wird, der Inhalt der bestimmten Art im Auswahlschritt ausgewählt wird (74, 85).

8. Inhaltsauswahl- und Darstellungsverfahren nach Anspruch 5, 6 oder 7, wobei:
die Information, welche die Kategorie des Inhalts zeigt, die Information, welche eine Periode zeigt, welche für den Inhalt eingestellt ist, oder die Information, welche die Intensität einer Information zeigt, welche für den Inhalt eingestellt ist, als Eigenschaftsinformation, welche die Eigenschaft des Inhalts zeigt, den Inhaltsdaten hinzugefügt wird, welche in der Speichereinrichtung im Aufzeichnungsmedium oder der externen Vorrichtung gespeichert sind; und
die Referenzinforination analysiert wird, die Eigenschaftsinformation darauf gezogen wird, und Inhalt, der eine Eigenschaft hat, die zu einem Analyseergebnis der Referenzinformation passt, im Auswahlschritt (74, 85) ausgewählt wird.

## Revendications

1. Terminal de communication (10) qui communique avec un autre terminal via un réseau de communication sans fil ou câblé, comprenant :
un moyen de sélection de contenu (65) pour sélectionner un contenu destiné à être présenté en relation avec une opération d'envoi/de réception du terminal de communication conformément à au moins un élément d'information de référence pris parmi :
une information (61) qui représente un temps d'envoi/de réception par le terminal de communication ;
une information (62) qui représente le contenu de l'opération d'envoi/de réception ;
une information (63) qui représente un environnement du terminal de communication ou un environnement de l'autre terminal qui communique avec le terminal de communication ; et
une information (64) qui représente une condition biologique d'un utilisateur du terminal de communication ou une condition biologique d'un utilisateur de l'autre terminal qui communique avec le terminal de communication ;
un moyen d'acquisition de données de contenu (31 ; 34) pour acquérir des données du contenu sélectionné en lisant les données à partir d'un dispositif de stockage (50) prévu dans le terminal de communication ou à partir d'un support d'enregistrement qui est installé dans le terminal de communication ou en recevant les données depuis un appareil externe (32 ; 35) ; et
un moyen de présentation de contenu (66) pour traiter les données de contenu acquises et pour présenter le contenu en utilisant un moyen d'émission en sortie (17 ; 26) prévu dans le terminal de communication (10) ou en utilisant un moyen d'émission en sortie externe connecté au terminal de communication, dans lequel les données de contenu sont présentées à la fin d'une conversation téléphonique (86) ou pendant la présentation d'un message reçu (76).

2. Terminal de communication selon la revendication 1, dans lequel le moyen de sélection de contenu (65) sélectionne (74 ; 85) le contenu conformément à l'information de référence et à une information de partie de communication représentant une partie de communication lors de l'opération d'envoi/de réception.

3. Terminal de communication selon la revendication 2, comprenant en outre un moyen de désignation de type de contenu pour désigner le type de contenu pour une partie de communication attendue lors de l'opération d'envoi/de réception, dans lequel :
les données de contenu stockées dans le dispositif de stockage (50), dans le support d'enregistrement ou dans l'appareil externe sont catégorisées selon une pluralité de types (51, 52, 53, 54, 55) de contenu ; et
lorsque le moyen de désignation de type de contenu désigne un type de contenu pour la partie de communication au niveau de l'opération d'envoi/de réception qui est représentée par l'information de partie de communication, le moyen de sélection de contenu sélectionne (74 ; 85) le contenu du type désigné.

4. Terminal de communication selon la revendication 1, 2 ou 3, dans lequel :
une information représentant la catégorie du contenu, une information représentant une période établie pour le contenu ou une information représentant l'intensité d'un message établi pour le contenu est additionnée, en tant qu'information de propriété représentant la propriété du contenu, aux données de contenu stockées dans le dispositif de stockage (50), dans le support d'enregistrement ou dans l'appareil externe ; et
le moyen de sélection de contenu (65) analyse l'information de référence, se réfère à l'information de propriété et sélectionne un contenu présentant une propriété qui correspond à un résultat d'analyse de l'information de référence.

5. Procédé de sélection et de présentation de contenu réalisé dans un terminal de communication qui communique avec un autre terminal via un réseau de communication sans fil ou câblé en relation avec une opération d'envoi/de réception du terminal de communication, le procédé comprenant les étapes de :
sélection (74, 85) d'un contenu à présenter conformément à au moins un élément d'information de référence pris parmi une information représentant un temps d'envoi/de réception par le terminal de communication,
une information (62) représentant le contenu de l'opération d'envoi/de réception ;
une information (63) représentant un environnement du terminal de communication ou un environnement de l'autre terminal qui communique avec le terminal de communication ; et
une information (64) représentant une condition biologique d'un utilisateur du terminal de communication ou une condition biologique d'un utilisateur de l'autre terminal qui communique avec le terminal de communication,
acquisition de données du contenu sélectionné en lisant les données à partir d'un dispositif de stockage (50) qui est prévu dans le terminal de communication (10) ou sur un support d'enregistrement qui est installé dans le terminal de communication ou en recevant les données depuis un appareil externe ; et
traitement des données de contenu acquises et présentation du contenu en utilisant un moyen d'émission en sortie qui est prévu dans le terminal de communication ou en utilisant un moyen d'émission en sortie externe qui est connecté au terminal de communication, dans lequel les données de contenu sont présentées à la fin d'une conversation (86) ou pendant la présentation d'un message reçu (76).

6. Procédé de sélection et de présentation de contenu selon la revendication 5, dans lequel le contenu est sélectionné (74, 85) lors de l'étape de sélection conformément à l'information de référence et à une information de partie de communication représentant une partie de communication lors de l'opération d'envoi/de réception.

7. Procédé de sélection et de présentation de contenu selon la revendication 6, dans lequel :
les données de contenu stockées dans le dispositif de stockage (50), dans le support d'enregistrement ou dans l'appareil externe sont catégorisées selon une pluralité de types (51, 52, 53, 54, 55) de contenu ; et
lorsqu'un type de contenu est désigné par un moyen de désignation de type de contenu pour désigner le type de contenu pour une partie de communication attendue lors de l'opération d'envoi/de réception, pour la partie de communication lors de l'opération d'envoi/de réception représentée par l'information de partie de communication, le contenu du type désigné est sélectionné au niveau de l'étape de sélection (74, 85).

8. Procédé de sélection et de présentation de contenu selon la revendication 5, 6 ou 7, dans lequel :
une information représentant la catégorie du contenu, une information représentant une période établie pour le contenu ou une information représentant l'intensité d'un message établi pour le contenu est additionnée, en tant qu'information de propriété représentant la propriété du contenu, aux données de contenu stockées dans le dispositif de stockage, dans le support d'enregistrement ou dans l'appareil externe ; et
l'information de référence est analysée, il est fait référence à l'information de propriété et un contenu présentant une propriété qui correspond à un résultat d'analyse de l'information de référence est sélectionné au niveau de l'étape de sélection (74, 85).
